Europäisches Patentamt

(19) European Patent Office

Office européen des brevets

(11) Veröffentlichungsnummer: **0 016 218**
**B1**

# (12) EUROPÄISCHE PATENTSCHRIFT

(45) Veröffentlichungstag der Patentschrift:
21.09.83

(21) Anmeldenummer: 79901134.1

(22) Anmeldetag: 05.09.79

(86) Internationale Anmeldenummer:
**PCT/EP 79/00069**

(87) Internationale Veröffentlichungsnummer:
**WO 80/00597 (03.04.80** Gazette 80/7)

(51) Int. Cl.³: **F 02 P 5/04,** F 02 P 11/06,
F 02 P 15/00

(54) EINRICHTUNG ZUM STEUERN VON BETRIEBSPARAMETERABHÄNGIGEN UND SICH WIEDERHOLENDEN VORGÄNGEN FÜR BRENNKRAFTMASCHINEN.

(30) Priorität: 05.09.78 DE 2838619

(43) Veröffentlichungstag der Anmeldung:
01.10.80 Patentblatt 80/20

(45) Bekanntmachung des Hinweises auf die Patenterteilung:
21.09.83 Patentblatt 83/38

(84) Benannte Vertragsstaaten:
DE FR GB SE

(56) Entgegenhaltungen:
FR-A-2 349 746
US-A-3 303 474
US-A-3 593 302
US-A-4 049 957

(73) Patentinhaber: **ROBERT BOSCH GMBH, Postfach 50,
D-7000 Stuttgart 1 (DE)**

(72) Erfinder: **HÖNIG, Gunther, Haldenstrasse 88,
D-7257 Ditzingen (DE)**
Erfinder: **KIENCKE, Uwe, Reichardshalde 35,
D-7140 Ludwigsburg (DE)**
Erfinder: **SCHULZ, Alfred, Wellerstrasse 1,
D-7141 Oberriexingen (DE)**

Einrichtung zum Steuern von betriebsparameterabhängigen und sich wiederholenden Vorgängen für
Brennkraftmaschinen

Die Erfindung betrifft eine Einrichtung zum Steuern von betriebsparameterabhängigen und sich wiederholenden Vorgängen für Brennkraftmaschinen, insbesondere der Zündungs- und/oder Einspritz- und/oder Getriebesteuerungsvorgänge, mit einem Rechner zur Ermittlung der Steuersignale in Abhängigkeit von einer mit einer rotierenden Welle verbundenen Geberanordnung sowie weiteren betriebsparameterabhängigen Gebern und mit wenigstens einer Steuerendstufe zur Auslösung der zu steuernden Vorgänge.

Bekannte Einrichtungen dieser Art (vgl. z.B. die DE-A-2 655 948) enthalten jeweils einen programmierbaren oder festverdrahteten Rechner. Ein solcher aus vielen Komponenten bestehender Rechner weist zum Teil sehr komplizierte Strukturen und daher eine Vielzahl von Fehlermöglichkeiten auf. Ein vielleicht an sich nebensächlicher Fehler kann jedoch zum Ausfall des zu steuernden Systems führen und die Brennkraftmaschine und ein eine solche Brennkraftmaschine enthaltendes Fahrzeug lahmlegen.

Der Erfindung liegt daher die Aufgabe zugrunde, eine Einrichtung der eingangs angegebenen Art zu schaffen, bei der auch bei Ausfall des Rechners die notwendigen Funktionen insoweit aufrechterhalten bleiben, dass der Betrieb der Brennkraftmaschine oder des Fahrzeugs auf einfache und billige Weise noch möglich ist.

Diese Aufgabe wird erfindungsgemäss dadurch gelöst, dass dem Rechner wenigstens eine einfache gebergesteuerte Hilfssteuervorrichtung, z.B. ein Zeitglied, zugeordnet ist und dass eine mit dem Rechner und der Hilfssteuervorrichtung verbundene Umschaltvorrichtung durch eine Programmfehler und sonstige Fehler der mit dem Rechner verbundenen Komponenten erkennenden Fehlerdekodierstufe so gesteuert wird, dass sie bei störungsfreiem Betrieb die Ausgangssignale des Rechners und bei einem Fehler die Ausgangssignale der Hilfssteuervorrichtung der Steuerendstufe zuführt.

Aus der FR-A 2 349 746 ist zwar ebenfalls eine aus zwei parallelen Systemen bestehende Einrichtung bekannt, um bei Ausfall des einen Systems noch ein System zur Verfügung zu haben, dort handelt es sich jedoch um völlig gleichwertige Systeme, deren identische Ausgangssignale überlagert werden, so dass bei vollständigem Ausfall eines Systems das andere System die Funktionen unverändert aufrechterhält. Dies hat jedoch gegenüber der erfindungsgemässen Einrichtung den Nachteil, dass das zweite System ebenso aufwendig und teuer wie das erste System ausgestaltet werden muss und dass bei fehlerhaften Ausgangssignalen eines Systmes diese fehlerhaften Ausgangssignale mit den korrekten Ausgangssignalen des anderen Systems in unerwünschter Weise überlagert werden. Demgegenüber findet bei der erfindungsgemässen Einrichtung infolge der Umschaltvorrichtung keine Überlagerung statt, d.h., immer nur eine Ausgangssignalfolge eines der beiden Systeme kann zur Steuerendstufe gelangen. Darüber hinaus ist als zweites System eine einfache und daher billige Hilfssteuervorrichtung gewählt, die lediglich allernotwendigste Funktionen erfüllen muss und es gegebenenfalls ermöglicht, dass ein Fahrzeug noch mit eigener Kraft zu einer Werkstatt gelangt.

In den abhängigen Ansprüchen sind vorteilhafte Weiterbildungen der Einrichtung nach Anspruch 1 angegeben. So kann eine besonders sichere Fehlererkennung dadurch erreicht werden, dass die mit dem Rechner verbundene Fehlerdekodierstufe zur seriellen Dekodierung von Signalfolgen als Register ausgebildet ist, dessen Registerinhalt periodisch abgefragt wird. Die Fehlermeldung bzw. Nicht-Fehlermeldung durch kodierte, serielle Signalfolgen zu realisieren, ergibt eine grösstmögliche Sicherheit in der Fehlererkennung. Als Umschaltvorrichtung zur Umschaltung vom Rechner auf die Hilfssteuervorrichtung dient vorzugsweise ein Multiplexer. Beim Einschalten der Hilfsvorrichtung wird bei einer weiteren Ausgestaltung der Erfindung eine mit der Fehlerdekodierstufe verbundene Anzeigevorrichtung betätigt.

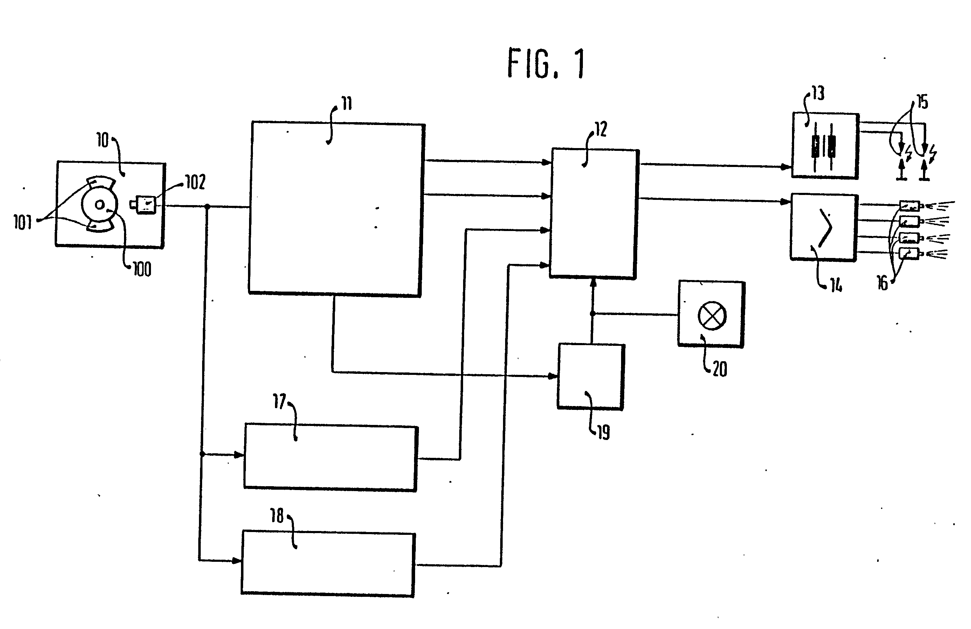

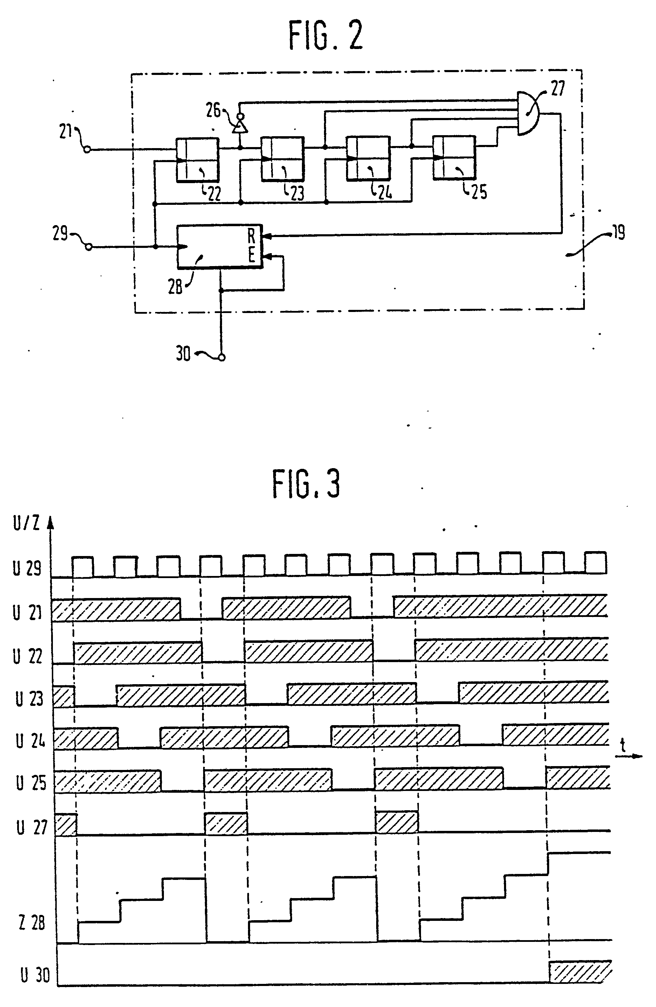

Ein Ausführungsbeispiel der Erfindung ist in der Zeichnung dargestellt und in der nachfolgenden Beschreibung näher erläutert. Es zeigt Fig. 1 ein Ausführungsbeispiel im Blockschaltbild, Fig. 2 eine schaltungsmässige Ausgestaltung einer Fehlerdekodierstufe und Fig. 3 ein Signaldiagramm zur Erläuterung der Wirkungsweise der in Fig. 2 dargestellten Schaltung.

In dem in Fig. 1 dargestellten Ausführungsbeispiel ist eine Geberanordnung 10 mit einem Rechner 11 verbunden. Eine solche Geberanordnung 10 besteht üblicherweise aus einer vorzugsweise mit der Kurbelwelle einer Brennkraftmaschien gekoppelten Geberscheibe 100, an der Bezugsmarken 101 angebracht sind. Diese Bezugsmarken 101 werden an einem Aufnehmer 102 vorbeigeführt und erzeugen dort ein Signal, das zur Vermittlung einer Drehzahlinformation und einer Winkelstellungsinformation dient. Die Erzeugung eines solchen Signals kann induktiv, optisch, durch den Hall-Effekt oder durch den Wiegang-Effekt erfolgen. Der Rechner 11 selbst kann als fest verdrahteter Rechner oder als programmierter Rechner ausgeführt sein. Zwei Steuerausgänge des Rechners 11 sind über eine z.B. als Multiplexer ausgebildete Umschaltvorrichtung 12 mit zwei Steuerendstufen 13, 14 verbunden. Ein geeigneter Multiplexer ist z.B. als Bauteil 4016 im Handel erhältlich. Die Steuerendstufe 13 ist als Zündungsendstufe ausgebildet, die üblicherweise aus einer Zündspule besteht, in deren Primärstromkreis ein Schalttransistor und in deren Sekundärstromkries wenigstens eine Zündkerze 15 geschaltet ist. Die Steuerendstufe 14 ist als Einspritzendstufe zur Steuerung der Kraftstoff-Einspritzvorgänge ausgebildet. Sie besteht im wesentlichen aus einer Verstärkerstufe, durch die Einspritzventile 16 gesteuert werden. Ein System 10 bis 16 ist – mit Ausnahme des Umschalters 12 – aus dem eingangs angegebenen Stand der Technik bekannt und dort näher beschrieben.

Durch den Rechner 11 können natürlich noch weitere Endstufen gesteuert werden, z.B. weitere Zündungsendstufen, um bei mehreren Zylindern einer Brennkraftmaschine eine hohe Spannungsverteilung ohne mechanisch bewegte Teile zu erreichen. Weiterhin können Endstufen für die Getriebesteuerung an den Rechner 11 angeschlossen sein.

Der Ausgang der Geberanordnung 10 ist weiterhin über zwei Hilfssteuervorrichtungen 17, 18 an Umschalteingänge der Umschaltvorrichtung 12 angeschlossen. Dabei dient die Hilfssteuervorrichtung 17 zur Notsteuerung der Zündungsendstufe 13 und die Hilfssteuervorrichtung 18 zur Notsteuerung der Einspritzendstufe 14. Solche Hilfssteuervorrichtungen können im einfachsten Fall als Zeitglieder ausgebildet sein, deren Haltezeit im Falle der Zündung die Schliesszeit des elektrischen Schalters im Primärstromkreis der Zündspule und im Falle der Einspritzung die Einspritzzeit vorgibt. Anstelle dieser einfachsten Version können als Hilfssteuervorrichtung auch etwas aufwendigere Vorrichtungen eingesetzt werden, wie sie z.B. aus der DE-A 2 640 791 oder der DE-A 2 700 676 bekannt sind. Diese Druckschriften beschreiben analoge bzw. digitale Systeme, und zwar ist in der ersten ein einfaches Zündverstellsystem mit wenigen Zählern und in der zweiten eine einfache Schliesswinkelsteuerung durch parameterabhängige Beeinflussung der Stromflusszeit als Beispiel gezeigt.

Der Rechner 11 ist über eine Fehlerdekodierstufe 19 mit dem Umschalt-Steuereingang der Umschaltvorrichtung 12 verbunden. Weiterhin ist der Ausgang dieser Fehlerdekodierstufe 19 mit einer optischen oder akustischen Anzeigevorrichtung 20 verbunden.

Die Wirkungsweise des in Fig. 1 dargestellten Ausführungsbeispiels besteht darin, dass bei störungsfreiem Betrieb die Umschaltvorrichtung 12 durch die Fehlerdekodierstufe 19 so gesteuert wird, dass die Endstufen 13, 14 über den Rechner 11 gesteuert werden. Tritt nun ein Fehler im Rechner 11 auf, der entweder ein fehlerhaftes Ausgangssignal oder überhaupt kein Ausgangssignal mehr zur Folge hat, so spricht die Fehlerdekodierstufe 19 an und schaltet die Umschaltvorrichtung 12 in ihren zweiten Schaltzustand, bei dem die Endstufen 13, 14 mit den Hilfssteuervorrichtungen 17, 18 verbunden sind. Gleichzeitig wird die Anzeigevorrichtung 20 betätigt. Die Zündungs- und Einspritzvorgänge werden nun durch die Hilfssteuervorrichtungen 17, 18 gesteuert, was zwar zu einer Beeinträchtigung des Fahrkomforts im Falle eines Kraftfahrzeugs führen kann, jedoch das Erreichen einer Werkstatt noch gewährleistet.

Anstelle der gemeinsamen Umschaltung sämtlicher Steuervorgänge auf die Hilfssteuervorrichtungen kann auch eine separate Umschaltung in dem Sinne vorgesehen werden, dass nur der Bereich, bei dem eine Störung auftritt, umgeschaltet wird. In diesem Fall wären mehrere Fehlerdekodierstufen notwendig.

Die Fehlerdekodierstufe 19 kann bei serieller Datenzuführung im einfachsten Fall aus einem retriggerbaren Zeitglied bestehen. Der Rechner 11 liefert dabei eine periodische Signalfolge, die die richtige Funktion anzeigt. Der grösstmögliche Signalabstand muss dabei kleiner sein als die Haltezeit des Zeitglieds, so dass dieses Zeitglied beim regulären Betrieb niemals zurückkippen kann. Erst wenn ein Signal ausbleibt, findet ein solches Rückkippen statt und löst die Umschaltung auf die Hilfssteuervorrichtungen aus.

An die Stelle eines seriellen Fehlersignals kann auch ein paralleles Fehlersignal treten. In diesem Falle muss die Fehlerdekodierstufe 19 als logische Verknüpfungsschaltung, insbesondere logische Gatter-Anordnung, ausgebildet sein. In Abhängigkeit von dem jeweiligen Rechnersystem können Bedingungen aufgestellt werden, die jeweils gleichzeitig periodisch auftreten müssen. Sind sämtliche Bedingungen gleichzeitig erfüllt, so wird durch die Gatteranordnung ein Ausgangssignal erzeugt, das die ordnungsgemässe Funktion kennzeichnet. Fehlt eine dieser Bedingungen, so entsteht das komplementäre Ausgangssignal, das eine Fehlfunktion kennzeichnet. Eine Zwischenspeicherung eines solchen Fehlersignals kann gegebenenfalls durch ein Flipflop erfolgen.

Eine vorteilhafte Realisierung einer Fehlerdekodierstufe 19 zur seriellen Dekodierung von Signalfolgen ist in Fig. 2 dargestellt. Die Klemme 21 ist die mit dem Ausgang des Rechners 11 verbundene Eingangsklemme der Fehlerdekodierstufe 19. Die Klemme 21 ist mit dem Eingang eines ersten Flipflops 22 verbunden, dem drei weitere Flipflops 23 bis 25 nachgeschaltet sind. Dabei ist jeweils der Ausgang eines Flipflops mit dem Eingang eines nachgeschalteten Flipflops verbunden. Der Ausgang des Flipflops 22 ist dabei über einen Inverter 26 mit einem Eingang eines UND-Gatters 27 verbunden, dessen weitere Eingänge an die Ausgänge der übrigen Flipflops 23 bis 25 angeschlossen sind. Der Ausgang des UND-Gatters 27 ist an dem Rücksetzeingang R eines digitalen Zählers 28 angeeschlossen. Eine eine Taktfrequenz führende Klemme 29 ist mit den Takteingängen der Flipflops 22 bis 25 sowie mit dem Takteingang des Zählers 28 verbunden. Ein Ausgang des Zählers 28 ist sowohl mit einer Ausgangsklemme 30 wie auch mit dem Sperreingang E (Enable) dieses Zählers 28 verbunden.

Die Wirkungsweise des in Fig. 2 dargestellten Ausführungsbeispiels soll im folgenden anhand des in Fig. 3 dargestellten Signaldiagramms erläutert werden. Die Bezeichnungen der Signale ordnen dabei diese Signale gleich bezeichneten Klemmen bzw. Ausgängen von gleich bezeichneten Bauteilen zu. Es sei davon ausgegangen, dass die vom Rechner zugeführte Signalfolge U21 bei ordnungsgemässer Funktion des Rechners so ausgebildet sein muss, dass jeweils während drei Taktsignalen U29 ein Signal U21 vorliegt und beim darauffolgendem Taktsignal U29 dieses Signal U21 entfällt. Im Rhythmus der Taktfrequenz werden die Signale U21 durch die Flipflops 22 bis 25 weitergeschoben. Mit jedem vierten Taktsignal liegt daher am Ausgang des Flipflops 22 ein 0-Signal und am Ausgang der übrigen Flipflops 23 bis 25 liegen 1-Signale. Durch den Inverter 26 ist damit die UND-Bedingung für das UND-Gatter 27 gegeben und es wird ein Rücksetzsignal U27 erzeugt. Im Zähler 28 wird daher zyklisch bis zur Zahl drei gezählt und dann der Zähler 28 rückgesetzt. In diesem Fall wird als Ausgang des Zählers 28 der drittniederste Ausgang ($2^2$) gewählt, der der Binärzahl 4 zugeordnet ist. Da die Zahl vier so nicht erreicht wird, liegt an der Klemme 30 ständig ein 0-Signal, durch das über die Umschaltvorrichtung 12 die Endstufen 13, 14 mit dem Rechner 11 verbunden sind.

Im dritten In Fig. 3 dargestellten Zyklus tritt ein Fehler auf, was sich durch eine veränderte Signalfolge U21 äussert. Beim vierten Taktsignal ist dadurch die UND-Bedingung für das UND-Gatter 27 nicht erfüllt, und es wird kein Rücksetzsignal für den Zähler 28 erzeugt. Im Zähler 28 wird dadurch auf den Wert vier gezählt, wodurch einmal an der Ausgangsklemme 30 ein 1-Signal liegt und zum anderen über den Sperreingang E der Zähler 28 für weitere Zählvorgänge gesperrt wird, bis wieder ein Rücksetzsignal auftritt. Dieses an der Klemme 30 liegende 1-Signal ist das dekodierte Fehlersignal, durch das die Umschaltvorrichtung 12 betätigt wird und eine Umschaltung der Endstufen 13, 14 auf die Hilfssteuervorrichtungen 17, 18 bewirkt.

An die Stelle der Signalfolge U21 können natürlich beliebig andere Signalfolgen treten, die ggf. durch längere Ketten von Flipflops und entsprechend geänderte Verknüpfung der Ausgänge dekodiert werden können.

Ausser der alleinigen Überwachung des Rechners ist auch die zusätzliche Überwachung weiterer Bauteile möglich. Dabei werden Signale in Bauteilen herangezogen, deren Auftreten eine bestimmte Signalkombination oder ein bestimmter Zustand im Rechner zugrunde liegen muss. Eine Verknüpfung solcher Signale kann dann entsprechend der vorherigen Beschreibung erfolgen.

Durch weitere Fehlerdekodierstufen 19 kann auch unterschieden werden, ob der jeweils auftretende Fehler so schwerwiegend ist, dass eine Umschaltung auf das Notsystem erforderlich ist, oder ob es ausreicht, dem Betreiber nur den Fehler anzuzeigen, ohne jedoch die Umschaltung vorzunehmen.

**Patentansprüche**

1. Einrichtung zum Steuern von betriebsparameterabhängigen und sich wiederholenden Vorgängen für Brennkraftmaschinen, insbesondere der Zündungs- und/oder Einspritz- und/oder Getriebesteuerungsvorgänge, mit einem Rechner (11) zur Ermittlung der Steuersignale in Abhängigkeit von einer mit einer rotierenden Welle verbundenen Geberanordnung (10) sowie weiteren betriebsparameterabhängigen Gebern und mit wenigstens einer Steuerendstufe (13, 14) zur Auslösung der zu steuernden Vorgänge, dadurch gekennzeichnet, dass dem Rechern (11) wenigstens eine einfache gebergesteuerte Hilfssteuervorrichtung (17, 18), z. B. ein Zeitglied, zugeordnet ist und dass eine mit dem Rechner und der Hilfssteuervorrichtung verbundene Umschaltvorrichtung (12) durch eine Programmfehler und sonstige Fehler der mit dem Rechner (11) verbundenen Komponenten erkennende Fehlerdekodierstufe (19) so gesteuert wird, dass sie bei störungsfreiem Betrieb die Ausgangssignale des Rechners (11) und bei einem Fehler die Ausgangssignale der Hilfssteuervorrichtung der Steuerendstufe (13, 14) zuführt.

2. Einrichtung nach Anspruch 1, dadurch gekennzeichnet, dass die mit dem Rechner (11) verbundene Fehlerdekodierstufe (19) als retriggerbares Zeitglied ausgebildet ist, dem der Rechner (11) bei fehlerfreier Funktion eine periodische Signalfolge liefert, bei der der grösste Signalabstand kleiner als die Haltezeit des Zeitglieds ist.

3. Einrichtung nach Anspruch 1, dadurch gekennzeichnet, dass die mit dem Rechner (11) verbundene Fehlerdekodierstufe (10) zur parallelen Dekodierung von Signalkombinationen als logische Verknüpfungsschaltung ausgebildet ist.

4. Einrichtung nach Anspruch 1, dadurch gekennzeichnet, dass die mit dem Rechner (11) verbundene Fehlerdekodierstufe (19) zur seriellen Dekodierung von Signalfolgen als Register ausgebildet ist, dessen Registerinhalt periodisch abgefragt wird.

5. Einrichtung nach Anspruch 4, dadurch gekennzeichnet, dass bei programmierbaren Rechnern (11) die Erzeugung von periodischen, seriellen Signalfolgen als Fehlerkriterien durch Programmbefehle erfolgt.

6. Einrichtung nach einem der vorhergehenden Ansprüche, dadurch gekennzeichnet, dass die Umschaltvorrichtung (12) als Multiplexer ausgebildet ist.

7. Einrichtung nach einem der vorhergehenden Ansprüche, dadurch gekennzeichnet, dass die Fehlerdekodierstufe (19) mit einer Anzeigevorrichtung (20) verbunden ist, die beim Einschalten der Hilfssteuervorrichtung betätigt wird.

**Claims**

1. Apparatus for controlling repeated operations and operations dependent on operating parameters for combustion engines, especially operations controlling the ignition and/or injection and/or transmission, comprising a computer (11) for determining the control signals in accordance with a sensor arrangement (10) associated with a rotating shaft as well as further sensors dependent on operating parameters and comprising at least one final control stage (13, 14) for triggering the operations to be controlled, characterised in that, at least one simple sensor-controlled auxiliary control device (17, 18), for example a timing element, is associated with the computer (11) and that a selector switching device (12) connected to the computer and to the auxiliary control device is so controlled by a failure decoding stage (19) recognizing programme failures and other failures of the components associated with the computer (11) that, during normal operation, it supplies the output signals from the computer (11) to the final control stage (13, 14) and on the occurrence of a failure it supplies the output signals from the auxiliary control device to the final control stage (13, 14).

2. Apparatus according to claim 1, characterised in that, the failure decoding stage (19) connected to the computer (11) is formed as a retriggerable timing element which delivers to the computer (11) during faultless operation, a periodical signal sequence in which the greatest signal spacing is less than the holding time of the timing element.

3. Apparatus according to claim 1, characterised in that, the failure decoding stage (19) connected to the computer (11) is formed as a logic gating circuit for the parallel decoding of signal combinations.

4. Apparatus according to claim 1, characterised in that, the failure decoding stage (19) connected to the computer (11) is formed as a register, the register content of which is interrogated periodically, for the serial decoding of signal sequences.

5. Apparatus according to claim 4, characterised in that, with programmable computers (11), the generation of periodic, serial signal sequences as failure criteria results from programme commands.

6. Apparatus according to one of the preceding claims, characterised in that, the selector switching device (12) is formed as a multiplexer.

7. Apparatus according to one of the preceding claims, characterised in that, the failure decoding stage (19) is connected to an indicating device (20) which is actuated when the auxiliary control device is switched on.

## Revendications

1. Installation pour commander des opérations dépendant de paramètres de fonctionnement et se répétant, pour moteurs à combustion interne, notamment les opérations d'allumage et/ou d'injection et/ou d'actionnement de mécanismes de transmission, comportant un calculateur (11) pour déterminer les signaux de commande en fonction d'un dispositif capteur-transmetteur (10) relié à un arbre en rotation ainsi que d'autres transmetteurs dépendant de paramètres de fonctionnement, et comportant également au moins un étage terminal de commande (13, 14) pour déclencher les opérations à commander, caractérisée en ce que, au calculateur (11) est associé au moins un dispositif de commande auxiliaire (17, 18) simple, commandé par un transmetteur, par exemple un élément temporisateur, et en ce qu'un dispositif de commutation (12) relié au calculateur et au dispositif de commande auxiliaire est commandé de telle manière, par un étage décodeur d'erreurs (19) détectant des erreurs de programme et d'autres défauts quelconques des composants reliés au calculateur (11), qu'il envoie à l'étage terminal de commande (13, 14), en cas de fonctionnement exempt de perturbation, les signaux de sortie du calculateur (11) et, lors d'une erreur, les signaux de sortie du dispositif de commande auxiliaire.

2. Installation selon la revendication 1, caractérisée en ce que l'étage décodeur d'erreurs (19) relié au calculateur (11) est constitué sous forme d'élément temporisateur à re-déclenchement, auquel le calculateur (11) fournit, en cas de fonctionnement exempt de défaut, une suite de signaux périodique, pour laquelle le plus grand intervalle entre signaux est inférieur au temps de maintien de l'élément temporisateur.

3. Installation selon la revendication 1, caractérisé en ce que l'étage décodeur d'erreurs (19) relié au calculateur (11) est constitué, pour décoder en parallèle des combinaisons de signaux, sous forme de circuit combinatoire logique.

4. Installation selon la revendication 1, caractérisée en ce que l'étage décodeur d'erreurs (19) relié au calculateur (11) est constitué, pour décoder en série des suites de signaux, sous forme de registre, dont le contenu est consulté périodiquement.

5. Installation selon la revendication 4, caractérisée en ce que, avec des calculateurs programmables (11), la production de suites de signaux en série, périodiques, s'effectue sous forme de critères d'erreurs, grâce à des ordres de programme.

6. Installation selon l'une des revendications précédentes, caractérisée en ce que le dispositif de commutation (12) est constitué sous forme de multiplexeur.

7. Installation selon l'une des revendications précédentes, caractérisée en ce que l'étage décodeur d'erreurs (19) est relié à un dispositif indicateur (20), qui est actionné lors de la mise en circuit du dispositif de commande auxiliaire.

FIG. 1

# FIG. 2

# FIG. 3